# EUROPÄISCHE PATENTSCHRIFT

(11) **EP 3 773 975 B1**
(45) Veröffentlichungstag und Bekanntmachung des Hinweises auf die Patenterteilung: **22.06.2022**
(21) Anmeldenummer: 19719166.1
(22) Anmeldetag: 02.04.2019
(51) Int. Cl.: B01D 33/067, B01D 33/073, B01D 33/09, B01D 33/80

(54) **VORRICHTUNG UND VERFAHREN ZUM ERFASSEN VON VERSCHLEISS EINES TRENNELEMENTS**
DEVICE AND METHOD FOR SENSING WEAR OF A SEPARATING ELEMENT
DISPOSITIF ET PROCÉDÉ DESTINÉS À DÉTECTER L'USURE D'UN ÉLÉMENT SÉPARATEUR

(30) Priorität: 06.04.2018 DE 102018205237
(43) Veröffentlichungstag der Anmeldung: 17.02.2021
(73) Patentinhaber: BHS-Sonthofen GmbH, 87527 Sonthofen (DE)
(72) Erfinder: KIENLE, Bernhard, 87527 Sonthofen (DE); HASSLER, Frieder, 87527 Sonthofen (DE); STEIDL, Detlef, 87527 Sonthofen (DE); SÜSS, Wolfgang, 87527 Sonthofen (DE)
(74) Vertreter: Herzog, Markus
(86) Internationale Anmeldenummer: PCT/EP2019/058283
(87) Internationale Veröffentlichungsnummer: WO 2019/193001

(56) Entgegenhaltungen:
- WO-A1-2006/130093
- WO-A1-2009/061247
- CN-U- 202 460 268
- DE-C1- 19 654 165
- US-A- 2 741 369

## Beschreibung

Die vorliegende Erfindung betrifft einen Druckdrehfilter nach dem Oberbegriff des Anspruchs 1.

Die Anmelderin vertreibt seit vielen Jahren Druckfilter. Bei derartigen Druckdrehfiltern wird eine Suspension, welche ein Gemisch aus Flüssigkeit und Feststoffen ist, auf eine rotierende Filtertrommel aufgebracht. Die Filtertrommel ist derart ausgebildet, dass Flüssigkeit der Suspension durch eine Wandung der Filtertrommel hindurchtreten kann, wohingegen Feststoffe der Suspension an einer Oberfläche der Filtertrommel verbleiben. Folglich entsteht an der Oberfläche der Filtertrommel eine Feststoffschicht, welche in Fachkreisen als "Filterkuchen" bezeichnet wird.

Die Suspension bzw. der Filterkuchen durchläuft verschiedene Prozesszonen, wie beispielsweise Wasch- und Trocknungszonen, welche voneinander gasdicht abgetrennt sind. Für diese Trennung sind üblicherweise sogenannte Trennelemente bereitgestellt, welche sich von dem Gehäuse durch den Prozessraum hindurch zu der Filtertrommel erstrecken und mit einem vorbestimmten Druck auf die Filtertrommel gepresst werden. Da sich die Filtertrommel unter den in Bezug auf das Gehäuse feststehenden und auf die Filtertrommel drückenden Trennelementen bewegt, entsteht an den Trennelementen Verschleiß.

Um die Funktion der Trennelemente auch bei fortschreitendem Verschleiß zu gewährleisten, werden die Trennelemente in Richtung der Filtertrommel entsprechend nachgeführt. Es liegt auf der Hand, dass ein derartiges Nachführen nur begrenzt möglich ist und die Trennelemente bei Erreichen einer vorbestimmten Abnutzung ausgetauscht werden müssen.

Bislang musste die Abnutzung der Trennelemente durch geschultes Personal nach Augenmaß überprüft werden oder es musste ein mechanischer Fühler abgelesen werden, welcher je nach Anordnung des Trennelements am Druckdrehfilter nur schwer zugänglich sein konnte.

Aus dem Dokument DE 196 54 165 C1, welches als nächstliegender Stand der Technik erachtet wird, ist ein Druckdrehfilter bekannt, in welchem eine Filtertrommel in einem Gehäuse aufgenommen ist, wobei unter Verwendung eines Elektromagneten ein jeweiliges Trennelement gegen eine Federkraft zurückgezogen werden kann. Ferner sei auf die Dokumente WO 2009/061247 A1 und WO 2006/130093 A1 hingewiesen.

Es ist daher die Aufgabe der vorliegenden Erfindung, eine Vorrichtung und ein Verfahren zum Erfassen von Verschleiß eines Trennelements bereitzustellen, welche bzw. welches den Komfort und/oder die Genauigkeit des Ableseprozesses verbessert.

In einem ersten Aspekt wird diese Aufgabe erfindungsgemäß durch einen gattungsgemäßen Druckdrehfilter nach Anspruch 1.

Gemäß dem Induktionsprinzip wird in der Spule Strom erzeugt, wenn der Stab in der Spule verlagert wird. Dabei kann das eine Ende des Stabs an dem Trennelement, insbesondere an einer zu dem Sensor weisenden Fläche des Trennelements, angebracht sein und das andere Ende des Stabs kann sich frei in die Spule erstrecken. Das freie Ende des Stabs kann sich beispielsweise in Verbindung mit einem neuen Trennelement zu dem von dem Trennelement weg weisenden Ende der Spule oder bis zur Mitte der Spule erstrecken. Auf eine Abnutzung und ein Nachführen des Trennelements hin wird das freie Ende des Stabs in Richtung des zu dem Trennelement hin weisenden Endes der Spule verlagert.

Die Trennelemente können aus einem Kunststoff, insbesondere aus einem thermoplastischen Kunststoff mit guten Gleiteigenschaften gegenüber Stahllaufflächen, hergestellt sein. Die Auswahl des Materials kann in Abhängigkeit der Einsatzbedingungen hinsichtlich chemischer Beständigkeit gegenüber den Betriebsmedien und Temperaturbeständigkeit erfolgen.

Insbesondere können die Trennelemente aus PE (UHMW), PA, PTFE, insbesondere PTFE mit Kohle/Graphit, PVDF (beispielsweise vorteilhaft bei erhöhter chemischer Beanspruchung) oder PEEK (beispielsweise vorteilhaft bei hohen Temperaturen) gebildet sein.

Über den durch das elektrisch leitfähige Material der Spule fließenden Strom kann auf die Verlagerung des Stabs, das heißt auf den Nachführungsweg des Trennelements, und somit auf den Verschleiß des Trennelements geschlossen werden.

Der Stab kann dabei von einer Teflonschicht oder einer anderen geeigneten Schicht, welche einen geringeren Reibungskoeffizienten aufweist als das Material des Stabs, umgeben sein, um eine Verlagerung des Stabs in einer Lagerung des Stabs zu erleichtern.

Um ein zuverlässiges Nachführen des Stabs gewährleisten zu können, insbesondere bei einer Anordnung, bei welcher ein Nachführen entgegen der Schwerkraft vorzunehmen ist, kann der Sensor ferner eine Feder umfassen, welche den Stab in Richtung des Trennelements vorspannt. Die Feder kann dabei derart angeordnet sein, dass die zwischen dem Stab und einem Teil des Gehäuses eine entsprechende Kraft aufbringt, welche den Stab in Richtung des Trennelements drängt. In diesem Fall kann die Feder als eine Druckfeder ausgeführt sein. Die Druckfeder kann entsprechend der Abnutzung des Trennelements eine Federkraft von beispielsweise 50 N bis 160 N aufbringen.

In einer Weiterbildung der vorliegenden Erfindung kann der Stab mit einem Auflageelement in Verbindung stehen, welches direkt auf dem Trennelement oder einer zwischen dem Trennelement und dem Auflageelement angeordneten Einheit, beispielsweise einer Membran, aufliegt. Der Stab kann in das Auflageelement, zum Beispiel unter Ausbildung eines Gewindeeingriffs, eingeführt sein. An seinem zu dem Trennelement weisenden Ende kann das Auflageelement eine vergrößerte Fläche, wie beispielsweise einen tellerförmigen Abschnitt, aufweisen. Eine an dem Sensor angeordnete Feder kann hier, anstatt auf den Stab, auf den tellerförmigen Abschnitt des Auflageelements einwirken.

Die zwischen dem Trennelement und dem Gehäuse angeordnete Membran kann gewährleisten, dass insbesondere bei einem stark abgenutzten und entsprechend nachgeführten Trennelement eine Gasabdichtung zwischen den durch das Trennelement getrennten Prozesszonen erhalten bleibt. Die vergrößerte Auflagefläche des Auflageelements kann insbesondere bei dessen Anordnung an einer Membran verhindern, dass die Membran beschädigt wird.

Es ist ferner denkbar, dass der Stab wahlweise mit einem aus einer Mehrzahl von Auflageelementen verbunden werden kann, welche sich beispielsweise derart in einer Länge unterscheiden, dass je nach Wahl des mit dem Stab verbundenen Auflageelements eine Gesamtlänge der Kombination aus Stab und Auflageelement variiert werden kann.

Der Sensor kann in einem Abschnitt des Druckdrehfilters angeordnet sein, welcher in der der gleichen Explosionsgefährdungsklasse zugeordnet ist wie der Prozessraum des Druckdrehfilters, vorteilhafterweise innerhalb des Prozessraums des Druckdrehfilters, angeordnet ist oder mit diesem in druckübertragender Verbindung steht. Üblicherweise ist der Einsatz von Sensoren in dem Prozessraum eines Druckdrehfilters aufgrund der einzuhaltenden Vorschriften bezüglich Explosionssicherheit und der besonderen Umgebungsbedingungen stark begrenzt. Der besonders einfache Aufbau des erfindungsgemäßen Sensors erlaubt jedoch dessen Einsatz in einer Umgebung, in der hohe Temperaturen und/oder hoher Druck und/oder ein hoher Verschmutzungsgrad, beispielsweise durch in der Luft enthaltene Feststoffe, herrscht bzw. herrschen. Eine Anordnung des Sensors im Prozessraum des Druckdrehfilters kann auch eine Abdichtung des Gehäuses des Druckdrehfilters vereinfachen. So muss beim Stand der Technik ein sich bewegender Fühler von dem Trennelement durch das Gehäuse hindurch zu einer Außenseite des Gehäuses geführt werden und entsprechend im Gehäuse abgedichtet, aber dennoch beweglich gelagert, sein. Dies erfordert üblicherweise einen hohen Aufwand bezüglich Konstruktion, Kosten und/oder Zulassung. Bei dem erfindungsgemäßen Sensor können lediglich die stromführenden Leitungen des Sensors durch das Gehäuse hindurch zu führen sein, welche als nicht bewegliche Teile einfach im Gehäuse abgedichtet werden können.

Typische Umgebungsbedingungen im Prozessraum des Druckdrehfilters sind beispielsweise Temperaturen von 0°C bis 120°C und Drücke von 1-10 barg (bei 0 barg Druck außerhalb des Gehäuses). Der Prozessraum des Druckdrehfilters wird üblicherweise als Explosionsgefährdungsklasse bzw. als explosionsgefährdete Zone 0 eingestuft.

Zur Unterstützung der Induktionswirkung des Stabs in der Spule kann der Stab aus einem magnetischen Material hergestellt sein. Natürlich ist es ebenfalls denkbar, dass der Stab aus einem magnetisierbaren oder lediglich metallischen Material hergestellt ist.

In einer vorteilhaften Weiterbildung der Erfindung kann der Messbereich des Sensors eine Verlagerung des Stabs um etwa 18 mm, insbesondere um etwa 22 mm, erfassen. Die Trennelemente eines erfindungsgemäßen Druckdrehfilters können demnach dazu ausgelegt sein, von einer ursprünglichen Länge durch Abnutzung um etwa 18 mm verkürzt zu werden. Ist dieser Abnutzungsgrad erreicht, sollten die Trennelemente durch neue ersetzt werden. Um jedoch auch den Fall einer zu starken Abnutzung erfassen zu können, kann es vorteilhaft sein, den erfassbaren Messbereich des Sensors größer auszulegen als eine entsprechende maximale Abnutzung, das heißt Verkürzung, der Trennelemente. Dieser Sicherheitsbereich kann im Fall des hier beschriebenen Druckdrehfilters 4 mm oder generell etwa 4% bis 5% betragen.

Erfindungsgemäß ist an die Spule ein Schwingkreis angelegt, welcher bei Verlagerung des Stabs in der Spule verstimmt wird. Zum Beispiel kann eine Charakteristik des Schwingkreises, welche bei einem neuen Trennelement und somit bei einem initial in der Spule angeordneten Stab vorliegt, als Normzustand verwendet werden. Auf Grundlage einer durch eine Verlagerung des Stabs innerhalb der Spule resultierenden Änderung der Charakteristik des Schwingkreises kann so ein Grad der Verlagerung des Stabs und daher eine entsprechende Verlagerung des Trennelements bestimmt werden. Vorteilhafterweise können Charakteristiken des Schwingkreises, welche vorbestimmten Verlagerungspositionen des Stabs zugehörig sind bzw. Änderungen dieser Charakteristiken zueinander in einer Speichereinheit gespeichert sein. Eine aktuelle Charakteristik des Schwingkreises kann dann mit einer gespeicherten Charakteristik verglichen werden, um eine Position bzw. eine Verlagerung des Stabs und somit des Trennelements zu bestimmen.

Insbesondere für eine derartige Auswertung kann der Sensor mit einer Auswerteeinheit elektrisch verbunden sein, welche außerhalb einer explosionsgefährdeten Zone des Prozessraums des Druckdrehfilters angeordnet ist.

Die Auswerteeinheit kann beispielsweise die voranstehend erwähnte Speichereinheit umfassen. Ein von der Spule des Sensors ausgegebener Strom bzw. ausgegebenes Signal kann in der Auswerteeinheit derart verarbeitet werden, dass eine Verlagerung des Trennelements und somit eine Abnutzung des Trennelements bestimmt werden kann. Die Anordnung der Auswerteeinheit außerhalb der explosionsgefährdeten Zone des Prozessraums des Druckdrehfilters kann es ermöglichen, eine Auswerteeinheit einzusetzen, welche bei einer Anordnung der Auswerteeinheit innerhalb der explosionsgefährdeten Zone des Prozessraums des Druckdrehfilters nicht zur Verfügung stehen könnte. Typischerweise kann die Auswerteeinheit so in einer nicht explosionsgefährdeten angeordnet sein.

Zur Trennung des Sensors von der Auswerteeinheit kann es vorteilhaft sein, dass zwischen dem Sensor und der Auswerteeinheit eine Zenerbarriere angeordnet ist. Eine Zenerbarriere kann die Zündfähigkeit des Stromkreises auf der Seite der Zenerbarriere, welche den Sensor umfasst, verhindern.

In einem zweiten Aspekt betrifft die vorliegende Erfindung ein Verfahren zum Erfassen von Verschleiß eines Trennelements eines Druckdrehfilters gemäß Anspruch 9.

In Bezug auf die Vorteile und möglichen Ausgestaltungsformen des erfindungsgemäßen Verfahrens sei bereits an dieser Stelle auf die Ausführungen der erfindungsgemäßen Vorrichtung des Druckdrehfilters verwiesen.

Gemäß der vorliegenden Erfindung ist das Verfahren zur Messung einer Verlagerung des Stabs und somit einer Verlagerung des Trennelements derart ausgebildet, dass auf Grund der Verlagerung des Stabs in der Spule in dem elektrisch leitfähigen Material, aus welchem die Spule gebildet ist, Strom fließt oder dass an die Spule ein Schwingkreis angelegt ist, welcher bei Verlagerung des Stabs in der Spule verstimmt wird.

Auch diesbezüglich sei explizit auf die entsprechende Beschreibung des Druckdrehfilters verwiesen.

Vorteilhafterweise kann der Sensor mit einer Auswerteeinheit verbunden sein, welche auf Grundlage des gemessenen Stroms oder der gemessenen Schwingkreis-Verstimmung eine Verlagerung des Stabs bzw. des Trennelements bestimmen kann. Die Auswerteeinheit kann dabei den gemessenen Strom oder die gemessene Schwingkreis-Verstimmung mit entsprechend bekannten Werten, welche beispielsweise in einer Speichereinheit der Auswerteeinheit gespeichert sind, vergleichen, um so eine Verlagerung bzw. eine Position des Stabs und somit eine Verlagerung bzw. eine Abnutzung des Trennelements bestimmen zu können.

Dabei kann die Auswerteeinheit ein Signal ausgeben, welches eine Verlagerung des Trennelements und/oder einen Abnutzungsgrad des Trennelements und/oder einen verbleibenden Abnutzungsweg des Trennelements und/oder eine verbleibende Betriebszeit des Trennelements und/oder eine Mitteilung bezüglich eines Austauschs des Trennelements anzeigt. Dieses Signal kann beispielsweise kontinuierlich an eine Anzeigeeinheit ausgegeben werden, welche wenigstens eine der voranstehend genannten Informationen grafisch und/oder akustisch darstellt. Insbesondere bei Erreichen einer Abnutzung des Trennelements, bei welcher das Trennelement auszutauschen ist, kann die Anzeigeeinheit aktiviert werden und kann beispielsweise ein Warnsignal an einen Benutzer des Druckdrehfilters ausgeben.

Es sei abschließend erwähnt, dass der erfindungsgemäße Sensoraufbau auch in anderen Abschnitten des Druckdrehfilters zum Einsatz kommen kann, wie beispielsweise zur Überwachung eines Füllstands eines Schmiermittel-Reservoirs oder zur Überwachung einer Abnutzung einer Stoffbuchspackung.

Im Folgenden wird die Erfindung in größerem Detail anhand der begleitenden Zeichnungen beschrieben werden.

Es stellt dar:
- Figur 1: eine Seitenquerschnittsansicht einer schematischen Darstellung des Funktionsprinzips einer Sensoranordnung an einem Druckdrehfilter;
- Figur 2: eine schematische Seitenquerschnittsansicht einer ersten Ausführungsform der Sensoranordnung an dem Druckdrehfilter;
- Figur 3: eine schematische Seitenquerschnittsansicht einer zweiten Ausführungsform der Sensoranordnung an dem Druckdrehfilter; und
- Figur 4: eine schematische Darstellung der Sensoranordnung und der Auswerteeinheit gemäß der vorliegenden Erfindung.

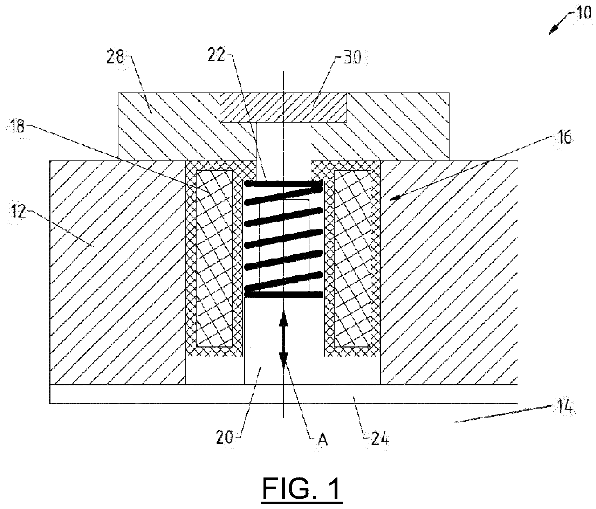

In Figur 1 ist ein erfindungsgemäßer Druckdrehfilter allgemein mit 10 bezeichnet. Der Druckdrehfilter 10 umfasst ein Gehäuse 12, welches eine Filtertrommel umgibt und in welcher die Filtertrommel drehbar gelagert ist. Zwischen der Filtertrommel und dem Gehäuse 12 des Druckdrehfilters 10 ist ein Prozessraum 14 gebildet, in welchem ein höherer Druck herrscht als an einer Außenseite des Gehäuses 12.

An einer Durchgangsöffnung des Gehäuses 12 ist ein Sensor 16 angeordnet, welcher eine Spule 18 und einen zumindest teilweise innerhalb der Spule angeordneten Stab 20 umfasst. Der Stab 20 ist hier aus einem magnetisierbaren Metall hergestellt.

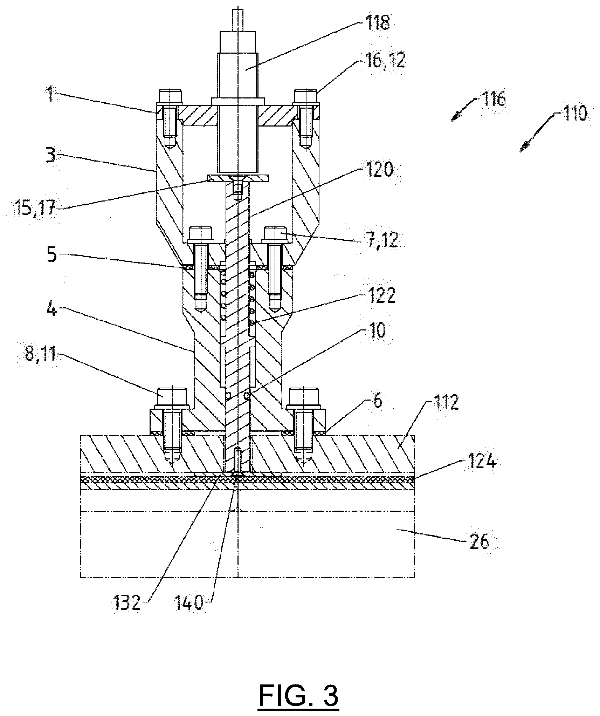

Der Stab 20 ist innerhalb der Spule 18, insbesondere entlang einer Richtung der Mittelachse der Spule 18 beweglich gelagert (siehe Pfeil A). Der Stab 20 wird von einer Feder 22 in Richtung einer Membran 24 derart vorgespannt, dass der Stab 20 auch bei einer Verlagerung der Membran 24 entlang der Richtung des Pfeils A mit dieser in Kontakt verbleibt. Die Membran 24 steht auf ihrer dem Stab 20 abgewandten Seite mit einem Trennelement 26 (siehe Figur 3) in Kontakt, welches wiederum auf die Filtertrommel des Druckdrehfilters drückt.

Die Öffnung des Gehäuses 12 ist zu einer Außenseite hin mit einem Deckel 28 abgedichtet, welcher eine druckfeste Kabeldurchführung 30 umfasst. Durch die druckfeste Kabeldurchführung 30 hindurch kann ein elektrischer Leiter, mit welchem die Spule 18 verbunden ist, aus dem Gehäuse herausgeführt werden.

Auf eine Abnutzung des Trennelements 26 hin wird die dem Sensor 16 zugewandte Seite des Trennelements 26 und somit die Membran 24 von diesem weg verlagert. Entsprechend wird der Stab 20 in der Spule 18 verlagert, so dass in der Spule 18, das heißt in dem elektrisch leitfähigen Material der Spule 18, Strom induziert wird. Dieser Strom kann als Grundlage einer Bestimmung der Verlagerung des Trennelements 26 dienen.

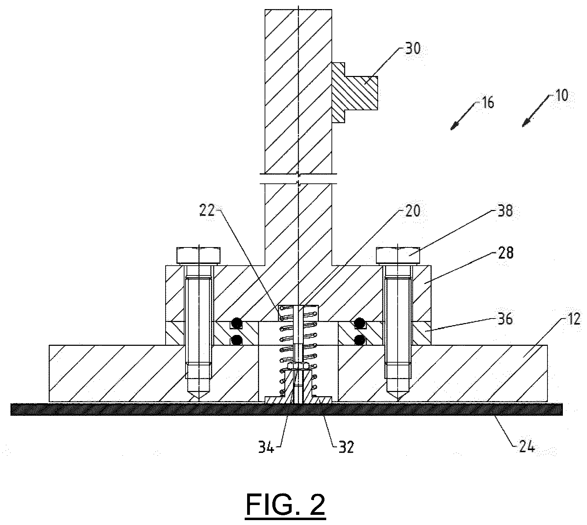

In Figur 2 ist eine erste Ausführungsform der Sensoranordnung 16 dargestellt, welche auf dem mit Bezug auf Figur 1 beschriebenen Prinzip basiert. Auch hier ist in dem Gehäuse 12 des Druckdrehfilters 10 eine Öffnung vorgesehen, in welcher der Stab 20 angeordnet ist. Die Spule 18 ist hier in einer zylinderförmigen Erweiterung des Deckels 28 positioniert. Am oberen rechten Ende der Figur 2 ist die druckfeste Kabeldurchführung 30 zu erkennen.

Im Gegensatz zu Figur 1 ist der Stab 20 gemäß der Ausführungsform von Figur 2 nicht einteilig ausgebildet, sondern umfasst ein mit dem Stab 20 in Eingriff stehendes Auflageelement 32, welches auf seiner dem Stab 20 abgewandten Seite mit der Membran 24 in Verbindung steht. In der in Figur 2 dargestellt Ausführungsform umfasst das der Membran 24 zugewandte Ende des Stabs 20 ein Gewinde auf welches eine Mutter 34 aufgeschraubt ist. Je nach Position der Mutter 34 auf dem Stab 20 kann eine Eintauchtiefe des Stabs 20 in das Auflageelement 32, und somit eine Gesamtlänge der Kombination aus Stab 20 und Auflageelement 32, eingestellt werden. Zwischen dem Deckel 28 und dem Auflageelement 32 wirkt die mit Bezug auf Figur 1 beschriebene Feder 22.

Aufgrund der Materialstärke des Gehäuses 12 ist hier zwischen dem Gehäuse 12 und dem Deckel 28 ein Zwischenelement 36 angeordnet, welches dazu dient, den Abstand zwischen dem Deckel 28 und der Membran 24 zu vergrößern.

Durch den Deckel 28 und das Zwischenelement 36 hindurch ist der Sensor 16 mit dem Gehäuse 12 über Schrauben 38 verschraubt.

Im Übrigen sei auf die Beschreibung mit Bezug auf Figur 1 verwiesen.

In Figur 3 ist eine zweite Ausführungsform der Sensoranordnung 16 gemäß Figur 2 dargestellt, welche sich von der Ausführungsform gemäß Figur 2 nur geringfügig unterscheidet, so dass analoge Bauteile mit gleichen Bezugszeichen versehen sind wie in Figur 2, jedoch erhöht um die Zahl 100.

Bezüglich der Merkmale der Ausführungsform gemäß Figur 3 sei bereits an dieser Stelle explizit auf die Beschreibungen bezüglich der Figuren 1 und 2 verwiesen.

In Figur 3 ist eine Sensoranordnung 116 bzw. ein Sensor 16 an einem

Gehäuse 112 eines Druckdrehfilters 110 angeordnet. Die Sensoranordnung 116 umfasst einen Stab 120, welcher relativ zu einer Spule 118 verlagerbar gelagert ist. Eine Feder 122 drängt den Stab 120 in Richtung einer Membran 124, welche wiederum mit dem Trennelement 26 in Verbindung steht.

Als Auflagefläche zwischen dem Stab 120 und der Membran 124 ist mit dem Stab 120 ein Auflageelement 132, welches hier als zylinderförmige Scheibe ausgebildet ist, verbunden. Das Auflageelement 132 ist hier mit dem Stab 120 über eine Schraube 140 verschraubt.

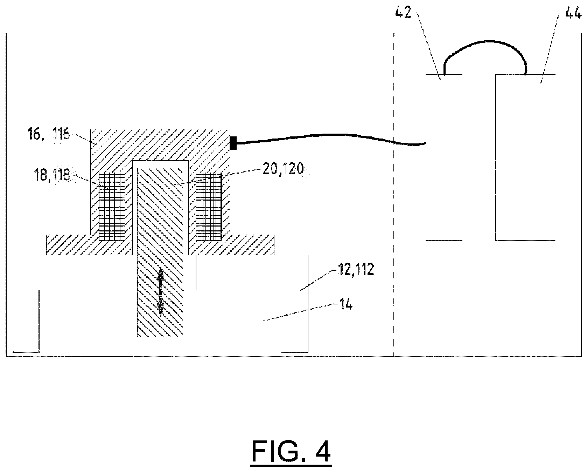

In Figur 4 ist die an dem Gehäuse 12 bzw. 112 des Druckdrehfilters 10 bzw. 110 angeordnete Sensoranordnung 16 bzw. 116, welche eine Spule 18 bzw. 118 und einen Stab 20 bzw. 120 umfasst, lediglich schematisch dargestellt.

Der in dem Gehäuse 12 bzw. 112 angeordnete Bereich, das heißt der Prozessraum 14 bildet aufgrund der dort herrschenden Umgebungsbedingungen eine Explosionsgefährdungsklasse bzw. eine explosionsgefährdete Zone 0. Der den Außenbereich des Gehäuses 12 bzw. 112 direkt umgebende Bereich bildet eine explosionsgefährdete Zone 1 aus, da auch hier gelegentlich Umgebungsbedingungen auftreten können, in welchen Explosionsgefahr herrscht. Mit dem Sensor 16 bzw. 116 ist über eine Zenerbarriere 42 eine Auswerteeinheit 44 elektrisch verbunden. Die Auswerteeinheit 44 befindet sich einerseits aufgrund der elektrischen Zwischenschaltung der Zenerbarriere 42 und andererseits aufgrund der räumlichen Anordnung außerhalb der explosionsgefährdeten Zone 1 in einem Bereich, in welchem keine Explosionsgefährdung und somit keine Anforderung an die Explosionssicherheit der dort befindlichen Bauteile vorliegt. Die Auswerteeinheit 44 verarbeitet die von dem Sensor 16 bzw. 116 ausgegebenen Signale und bestimmt auf deren Basis eine Verlagerung und/oder einen Verschleiß des entsprechenden Trennelements 26.

## Patentansprüche

1. Druckdrehfilter (10, 110), umfassend
eine Filtertrommel, welche dazu eingerichtet ist, zu filtrierende Suspension zu filtern,
ein Gehäuse (12, 112), welches die Filtertrommel umgibt und in welchem die Filtertrommel drehbar gelagert ist, wobei zwischen der Filtertrommel und dem Gehäuse (12, 112) ein Prozessraum (14) gebildet ist, und
wenigstens ein Trennelement (26), welches derart zwischen dem Gehäuse (12, 112) und der Filtertrommel angeordnet ist, dass es den Prozessraum (14) in einer gasdichten Weise in eine Mehrzahl von Prozessabschnitten unterteilt,
**dadurch gekennzeichnet, dass** an der dem Gehäuse (12, 112) zugewandten Seite wenigstens eines Trennelements (26) ein Sensor (16, 116) angeordnet ist, welcher Folgendes umfasst:
eine unter Verwendung eines elektrisch leitfähigen Materials gebildete Spule (18, 118) und
einen aus einem Metall gebildeten Stab (20, 120), welcher innerhalb der Spule (18, 118) angeordnet ist,
wobei der Stab (20, 120) dazu eingerichtet ist, auf Grundlage einer Abstandsänderung des Trennelements (26) relativ zu dem Sensor (16, 116) in der Spule (18, 118) verlagert zu werden, und
dass an die Spule (18, 118) ein Schwingkreis angelegt ist, welcher bei Verlagerung des Stabs (20, 120) in der Spule (18, 118) verstimmt wird.

2. Druckdrehfilter (10, 110) nach Anspruch 1,
**dadurch gekennzeichnet, dass** der Sensor (16, 116) ferner eine Feder (22, 122) umfasst, welche den Stab (20, 120) in Richtung des Trennelements (26) vorspannt.

3. Druckdrehfilter (10, 110) nach Anspruch 1 oder 2,
**dadurch gekennzeichnet, dass** der Stab (20, 120) mit einem Auflageelement (32, 132) in Verbindung steht, welches direkt auf dem Trennelement (26) oder einer zwischen dem Trennelement (26) und dem Auflageelement (32, 132) angeordneten Einheit (24, 124), beispielsweise einer Membran, aufliegt.

4. Druckdrehfilter (10, 110) nach einem der Ansprüche 1 bis 3,
**dadurch gekennzeichnet, dass** der Sensor (16, 116) in einem Abschnitt des Druckdrehfilters (10, 110) angeordnet ist, welcher der gleichen Explosionsgefährdungsklasse zugeordnet ist wie der Prozessraum (14) des Druckdrehfilters (10, 110), vorteilhafterweise innerhalb des Prozessraums (14) des Druckdrehfilters (10, 110) angeordnet ist oder mit diesem in druckübertragender Verbindung steht.

5. Druckdrehfilter (10, 110) nach einem der Ansprüche 1 bis 4,
**dadurch gekennzeichnet, dass** der Stab (20, 120) aus einem magnetischen Material hergestellt ist.

6. Druckdrehfilter (10, 110) nach einem der Ansprüche 1 bis 5,
**dadurch gekennzeichnet, dass** der Messbereich des Sensors (16, 116) eine Verlagerung des Stabs (20, 120) um etwa 18 mm, insbesondere um etwa 22 mm, erfasst.

7. Druckdrehfilter (10, 110) nach einem der Ansprüche 1 bis 6,
**dadurch gekennzeichnet, dass** der Sensor (16, 116) mit einer Auswerteeinheit (44) elektrisch verbunden ist, welche außerhalb einer explosionsgefährdeten Zone des Prozessraums (14) des Druckdrehfilters (10, 110) angeordnet ist.

8. Druckdrehfilter (10, 110) nach Anspruch 7,
**dadurch gekennzeichnet, dass** zwischen dem Sensor (16, 116) und der Auswerteeinheit (44) eine Zenerbarriere (42) angeordnet ist.

9. Verfahren zum Erfassen von Verschleiß eines Trennelements (26) eines Druckdrehfilters (10, 110), welcher
eine Filtertrommel, mittels welcher zu filtrierende Suspension gefiltert wird,
ein Gehäuse (12, 112), welches die Filtertrommel umgibt und in welchem die Filtertrommel drehbar gelagert ist, wobei zwischen der Filtertrommel und dem Gehäuse (12, 112) ein Prozessraum (14) gebildet ist, und
wenigstens ein Trennelement (26), welches derart zwischen dem Gehäuse (12, 112) und der Filtertrommel angeordnet ist, dass es den Prozessraum (14) in einer gasdichten Weise in eine Mehrzahl von Prozessabschnitten unterteilt, umfasst,
**dadurch gekennzeichnet, dass** an der dem Gehäuse (12, 112) zugewandten Seite wenigstens eines Trennelements (26) ein Sensor (16, 116) angeordnet ist, welcher
eine unter Verwendung eines elektrisch leitfähigen Materials Spule (18, 118) und
einen aus einem Metall gebildeten Stab (20, 120), welcher innerhalb der Spule (18, 118) angeordnet ist, umfasst,
wobei der Stab (20, 120), auf Grundlage einer Abstandsänderung des Trennelements (26) relativ zu dem Sensor (16, 116), in der Spule (18, 118) verlagert wird, und dass auf Grund der Verlagerung des Stabs (20, 120) in der Spule (18, 118) in dem elektrisch leitfähigen Material, aus welchem die Spule (18, 118) gebildet ist, Strom fließt oder dass an die Spule (18, 118) ein Schwingkreis angelegt ist, welcher bei Verlagerung des Stabs (20, 120) in der Spule (18, 118) verstimmt wird.

10. Verfahren nach Anspruch 9,
**dadurch gekennzeichnet, dass** der Sensor (16, 116) mit einer Auswerteeinheit (44) verbunden ist, welche auf Grundlage des gemessenen Stroms oder der gemessenen Schwingkreis-Verstimmung eine Verlagerung des Stabs (20, 120) bzw. des Trennelements (26) bestimmt.

11. Verfahren nach Anspruch 10,
**dadurch gekennzeichnet, dass** die Auswerteeinheit (44) ein Signal ausgibt, welches eine Verlagerung des Trennelements (26) und/oder einen Abnutzungsgrad des Trennelements (26) und/oder einen verbleibenden Abnutzungsweg des Trennelements (26) und/oder eine verbleibende Betriebszeit des Trennelements (26) und/oder eine Mitteilung bezüglich eines Austauschs des Trennelements (26) anzeigt.

## Claims

1. Rotary pressure filter (10, 110) comprising
a filter drum which is designed to filter the suspension to be filtered,
a housing (12, 112) which surrounds the filter drum and in which the filter drum is rotatably mounted, a process chamber (14) being formed between the filter drum and the housing (12, 112), and
at least one separating element (26) which is arranged between the housing (12, 112) and the filter drum such that said element divides the process chamber (14) into a plurality of process portions in a gas-tight manner,
**characterised in that** a sensor (16, 116) is arranged on the side of at least one separating element (26) that faces the housing (12, 112), which sensor comprises the following:
a coil (18, 118) formed using an electrically conductive material and
a rod (20, 120) made of a metal, which is arranged inside the coil (18, 118),
the rod (20, 120) being designed to be displaced in the coil (18, 118) on the basis of a change in the distance of the separating element (26) from the sensor (16, 116), and
a resonant circuit is applied to the coil (18, 118) and is detuned when the rod (20, 120) is displaced in the coil (18, 118).

2. Rotary pressure filter (10, 110) according to claim 1,
**characterised in that** the sensor (16, 116) further comprises a spring (22, 122) which pretensions the rod (20, 120) in the direction of the separating element (26).

3. Rotary pressure filter (10, 110) according to either claim 1 or claim 2, **characterised in that** the rod (20, 120) is connected to a support element (32, 132) which is supported directly on the separating element (26) or is supported on a unit (24, 124), for example a membrane, arranged between the separating element (26) and the support element (32, 132).

4. Rotary pressure filter (10, 110) according to any of claims 1 to 3, **characterised in that** the sensor (16, 116) is arranged in a portion of the rotary pressure filter (10, 110) which is assigned to the same explosion hazard class as the process chamber (14) of the rotary pressure filter (10, 110), is advantageously arranged inside the process chamber (14) of the rotary pressure filter (10, 110), or is connected thereto in a pressure-transmitting manner.

5. Rotary pressure filter (10, 110) according to any of claims 1 to 4, **characterised in that** the rod (20, 120) is produced from a magnetic material.

6. Rotary pressure filter (10, 110) according to any of claims 1 to 5, **characterised in that** the measuring range of the sensor (16, 116) detects displacement of the rod (20, 120) by approximately 18 mm, in particular by approximately 22 mm.

7. Rotary pressure filter (10, 110) according to any of claims 1 to 6, **characterised in that** the sensor (16, 116) is electrically connected to an evaluation unit (44) which is arranged outside an explosion hazard zone of the process chamber (14) of the rotary pressure filter (10, 110).

8. Rotary pressure filter (10, 110) according to claim 7,
**characterised in that** a Zener barrier (42) is arranged between the sensor (16, 116) and the evaluation unit (44).

9. Method for detecting wear of a separating element (26) of a rotary pressure filter (10, 110) which comprises
a filter drum, by means of which the suspension to be filtered is filtered,
a housing (12, 112) which surrounds the filter drum and in which the filter drum is rotatably mounted, a process chamber (14) being formed between the filter drum and the housing (12, 112), and
at least one separating element (26) which is arranged between the housing (12, 112) and the filter drum such that said separating element divides the process chamber (14) into a plurality of process portions in a gas-tight manner, **characterised in that** a sensor (16, 116) is arranged on the side of at least one separating element (26) which faces the housing (12, 112), which sensor comprises
a coil (18, 118) formed using an electrically conductive material, and
a rod (20, 120) made of a metal, which is arranged inside the coil (18, 118),
the rod (20, 120) being displaced in the coil (18, 118) on the basis of a change in the distance of the separating element (26) from the sensor (16, 116), and
wherein, due to the displacement of the rod (20, 120) in the coil (18, 118), current flows in the electrically conductive material which the coil (18, 118) is made of, or **in that** a resonant circuit is applied to the coil (18, 118) and is detuned when the rod (20, 120) is displaced in the coil (18, 118).

10. Method according to claim 9,
**characterised in that** the sensor (16, 116) is connected to an evaluation unit (44) which determines displacement of the rod (20, 120) or the separating element (26) on the basis of the measured current or the measured resonant circuit detuning.

11. Method according to claim 10,
**characterised in that** the evaluation unit (44) outputs a signal that indicates displacement of the separating element (26) and/or a degree of wear of the separating element (26) and/or a remaining wear path of the separating element (26) and/or a remaining operating time of the separating element (26) and/or a notification regarding replacement of the separating element (26).

## Revendications

1. Filtre rotatif sous pression (10, 110), comprenant
un tambour de filtre, qui est conçu pour filtrer la suspension à filtrer,
un boîtier (12, 112) qui entoure le tambour de filtre et dans lequel le tambour de filtre est logé de manière rotative, un espace de traitement (14) étant formé entre le tambour de filtre et le boîtier (12, 112), et
au moins un élément de séparation (26) qui est disposé entre le boîtier (12, 112) et le tambour de filtre de telle sorte qu'il divise l'espace de traitement (14) d'une manière étanche aux gaz en une pluralité de sections de traitement,
**caractérisé en ce qu'**un capteur (16, 116) est disposé sur le côté d'au moins un élément de séparation (26) tourné vers le boîtier (12, 112), lequel capteur comprend ce qui suit :
une bobine (18, 118) formée en utilisant un matériau électriquement conducteur,
et
une tige (20, 120) formée d'un métal et disposée à l'intérieur de la bobine (18, 118),
la tige (20, 120) étant adaptée pour être déplacée dans la bobine (18, 118) sur la base d'un changement de distance de l'élément de séparation (26) par rapport au capteur (16, 116), et
**en ce qu'**un circuit oscillant est appliqué à la bobine (18, 118), lequel est désaccordé lors du déplacement de la tige (20, 120) dans la bobine (18, 118).

2. Filtre rotatif sous pression (10, 110) selon la revendication 1,
**caractérisé en ce que** le capteur (16, 116) comprend en outre un ressort (22, 122) qui sollicite la tige (20, 120) en direction de l'élément de séparation (26).

3. Filtre rotatif sous pression (10, 110) selon la revendication 1 ou 2,
**caractérisé en ce que** la tige (20, 120) est en liaison avec un élément d'appui (32, 132) qui repose directement sur l'élément de séparation (26) ou sur un ensemble (24, 124), par exemple une membrane, disposé entre l'élément de séparation (26) et l'élément d'appui (32, 132).

4. Filtre rotatif sous pression (10, 110) selon l'une des revendications 1 à 3, **caractérisé en ce que** le capteur (16, 116) est disposé dans une section du filtre rotatif sous pression (10, 110) qui est affectée à la même classe de risque d'explosion que l'espace de traitement (14) du filtre rotatif sous pression (10, 110), est avantageusement disposé à l'intérieur de l'espace de traitement (14) du filtre rotatif sous pression (10, 110) ou est en communication de transmission de pression avec celui-ci.

5. Filtre rotatif sous pression (10, 110) selon l'une quelconque des revendications 1 à 4,
**caractérisé en ce que** la tige (20, 120) est réalisée en un matériau magnétique.

6. Filtre rotatif sous pression (10, 110) selon l'une des revendications 1 à 5, **caractérisé en ce que** la plage de mesure du capteur (16, 116) détecte un déplacement de la tige (20, 120) d'environ 18 mm, notamment d'environ 22 mm.

7. Filtre rotatif sous pression (10, 110) selon l'une des revendications 1 à 6, **caractérisé en ce que** le capteur (16, 116) est relié électriquement à une unité d'évaluation (44) qui est disposée en dehors d'une zone à risque d'explosion de l'espace de traitement (14) du filtre rotatif sous pression (10, 110).

8. Filtre rotatif sous pression (10, 110) selon la revendication 7,
**caractérisé en ce qu**'une barrière Zener (42) est disposée entre le capteur (16, 116) et l'unité d'évaluation (44).

9. Procédé de détection de l'usure d'un élément de séparation (26) d'un filtre rotatif sous pression (10, 110), lequel comprend
un tambour de filtre, au moyen duquel la suspension à filtrer est filtrée,
un boîtier (12, 112) qui entoure le tambour de filtre et dans lequel le tambour de filtre est monté à rotation, un espace de traitement (14) étant formée entre le tambour de filtre et le boîtier (12, 112), et
au moins un élément de séparation (26), qui est disposé entre le boîtier (12, 112) et le tambour de filtre de telle sorte qu'il divise l' espace de traitement (14) d'une manière étanche aux gaz en une pluralité de sections de traitement,
**caractérisé en ce qu'un** capteur (16, 116) est disposé sur le côté d'au moins un élément de séparation (26) orienté vers le boîtier (12, 112), lequel capteur (16, 116) comprend une bobine (18, 118) formée en utilisant un matériau électriquement conducteur et
une tige (20, 120) formée d'un métal qui est disposée à l'intérieur de la bobine (18, 118),
dans lequel la tige (20, 120) est déplacée dans la bobine (18, 118) sur la base d'un changement de distance de l'élément de séparation (26) par rapport au capteur (16, 116), et **en ce que**, sur la base du déplacement de la tige (20, 120) dans la bobine (18, 118) dans le matériau électriquement conducteur dont la bobine (18, 118) est constituée, un courant circule, ou qu'un circuit oscillant est appliqué à la bobine (18, 118), lequel est désaccordé lors du déplacement de la tige (20, 120) dans la bobine (18, 118).

10. Procédé selon la revendication 9,
**caractérisé en ce que** le capteur (16, 116) est relié à une unité d'évaluation (44) qui détermine un déplacement de la tige (20, 120) ou de l'élément de séparation (26) sur la base du courant mesuré ou du désaccord de circuit oscillant mesuré.

11. Procédé selon la revendication 10,
**caractérisé en ce que** l'unité d'évaluation (44) émet un signal indiquant un déplacement de l'élément de séparation (26) et/ou un degré d'usure de l'élément de séparation (26) et/ou une distance d'usure restante de l'élément de séparation (26) et/ou un temps de fonctionnement restant de l'élément de séparation (26) et/ou un message concernant un remplacement de l'élément de séparation (26).
